# EUROPEAN PATENT APPLICATION

(11) **EP 1 830 057 A1**
(43) Date of publication of application: **05.09.2007**
(21) Application number: 05816527.5
(22) Date of filing: 09.12.2005
(51) Int. Cl.: F02D 41/06, F02D 41/14, F02D 41/40, F02D 45/00

(54) **FUEL INJECTION CONTROL DEVICE FOR INTERNAL COMBUSTION ENGINE**

(30) Priority: 14.12.2004 JP 2004361200
(71) Applicant: TOYOTA JIDOSHA KABUSHIKI KAISHA, Toyota-shi Aichi 471-8571 (JP)
(72) Inventor: IWATANI, Kazuki, TOYOTA JIDOSHA KABUSHIKI KAISHA, Toyota-shi, Aichi; 4718571 (JP)
(74) Representative: Harris, Ian Richard
(86) International application number: PCT/JP2005/023095
(87) International publication number: WO 2006/064891

(57) **Abstract**

In a fuel injection control apparatus for an internal combustion engine, misfiring during the engine start-up is suppressed, and the time from the start-up initiation to the start-up completion is set to a more appropriate time. A fuel injection control apparatus for a compression ignition-type internal combustion engine that has a plurality of cylinders includes fuel injection valves that are provided for each of the cylinders and inject fuel into each of the cylinders; combustion state detecting means that evaluates or detects the combustion state in each of the cylinders; and fuel injection timing setting means that alters the fuel injection timing in a cylinder that the combustion state detecting means has evaluated or detected to have misfired to a first fuel injection timing. Specifically, the fuel injection timing for each cylinder is altered.

## Description

### TECHNICAL FIELD

The present invention relates to a fuel injection control apparatus for an internal combustion engine.

### BACKGROUND ART

During a cold start-up of an internal combustion engine, the combustion state in the cylinders becomes unstable because the temperature of a cylinder wall surface is low, and thus a misfire may occur.

As a countermeasure, technology is known in which, during the start-up of a diesel engine, the cylinder that will ignite first is detected, and the fuel injection timing and the amount of fuel that is injected into the cylinders that ignite in sequence are altered depending on the engine speed and the water temperature. Refer, for example, to:
Patent Document 1: Japanese Patent Application Publication No. JP-A-H8-296477
Patent Document 2: Japanese Patent Application Publication No. JP-A-S63-154841
Patent Document 3: Japanese Patent Application Publication No. JP-A-2000-8930
Patent Document 4: Japanese Patent Application Publication No. JP-A-2002-30960
According to these conventional technologies, the firing sequence becomes precise, and the start-up performance is improved.

However, when a misfire occurs after the initial ignition, the ignition sequence becomes incorrect, and conventionally, the fuel injection to a cylinder that has misfired is stopped. Thus, the time until the start-up of the internal combustion engine has completed becomes long.

### DISCLOSURE OF THE INVENTION

In consideration of the problem described above, it is an object of the present invention to provide, in a fuel injection control apparatus for an internal combustion engine, a technology in which misfiring during engine start-up is suppressed and the time from start-up initiation to start-up completion is more appropriate.

In order to attain this object, the fuel injection control apparatus for an internal combustion engine is a fuel injection timing control apparatus for a compression ignition-type internal combustion engine having a plurality of cylinders,
characterized in including:
fuel injection valves that are provided for each of the cylinders and that inject fuel into the cylinders;
combustion state detecting means that evaluates or detects the combustion state of each of the cylinders; and
fuel injection timing setting means that alters the fuel injection timing of a cylinder that has been evaluated or detected to have misfired by the combustion state detecting means to a first fuel injection timing.

Here, fuel injection valves are provided on each of the cylinders, and it is possible to inject fuel into each of the cylinders at different timings.

In addition, the combustion state detecting means estimates or detects the combustion state of each of the cylinders. Then the combustion state detecting means detects whether the combustion in the cylinder has occurred normally or a misfire has occurred. Here, a misfire can include the case in which the air-fuel mixture has not been ignited, the case in which the flame does not propagate after the air-fuel mixture has been ignited and flames out; and the case in which flame propagation occurs, but the flame is extinguished while much air-fuel mixture remains. In addition, the case in which a portion of the air-fuel mixture, which has been supplied to a cylinder, equal to or greater than a tolerated ratio remains without combusting can also be also referred to as a misfire. Furthermore, the case in which the combustion state has deteriorated can also be referred to as a misfire.

The fuel injection timing setting means alters the fuel injection timing in each of the cylinders. Fuel from the fuel injection valves is injected at fuel injection timings that have been set by this fuel injection timing setting means. In addition, the fuel injection timing setting means sets the fuel injection timing of a cylinder that is misfiring at a first fuel injection timing.

In addition, it is possible to improve the combustion state of a cylinder that is misfiring by making the fuel injection timing of the misfiring cylinder differ from the fuel injection timing of a cylinder in which a misfire has not occurred. In addition, in a cylinder in which a misfire has not occurred, because the fuel injection timing is not altered from the normal timing, it is possible to suppress a reduction in the generated torque and the like. In this manner, by altering the fuel injection timing of only the misfiring cylinders, it is possible to improve the start-up performance of the internal combustion engine. In addition, because the fuel injection timing is set for each cylinder, it is possible to promote the combustion of the fuel irrespective of differences between cylinders, such as temperature differences in the glow plugs, intake air amount differences, wall surface temperature differences, and the like.

Note that "alters the fuel injection timing toward a first fuel injection timing" may also mean that the fuel injection timing is set at the first fuel injection timing, or may mean altering the fuel injection timing toward the first fuel injection timing side only by an amount that is determined in advance.

In the present invention, the first fuel injection timing may be a fuel injection timing in which the fuel ignites more readily than the fuel injection timing that is used when a misfire has been detected.

Here, when the fuel injection timing of the fuel is altered, the readiness of the fuel ignition, that is, the ignitability, changes. For example, the gas temperature in the cylinder increases as the piston rises, and becomes highest when the piston position is at compression top dead center. Subsequently, the gas temperature in the cylinder is reduced as the piston moves downward. In addition, because the fuel ignites more readily as the gas temperature in the cylinder becomes higher, by carrying out the injection of the fuel in proximity to the compression top dead center, it is possible to increase the ignitability of the fuel and it is possible to improve the combustion state. Therefore, "a fuel injection timing at which the fuel ignites more readily" may denote a fuel injection timing at which the ignitability of the fuel is optimal, or may denote the compression top dead center.

In the present invention, in a cylinder in which the combustion state detecting means has evaluated or detected that a misfire has not occurred, the fuel injection timing of a cycle that follows a cycle that has been evaluated or detected to have not misfired can be set to a fuel injection timing that is used when the combustion state detecting means has evaluated or detected that a misfire has not occurred.

Here, when the injection timing of the fuel is set to the compression top dead center so as to optimize ignitability, instead of the ignitability improving, the generated torque is reduced. That is, if the fuel is injected and combusted when the piston is in proximity to the compression top dead center, the cooling loss becomes large because the amount of heat that escapes to the combustion chamber wall surface is high, and the generated torque is reduced by an equivalent amount. Thus, in a cylinder in which a misfire has not occurred, the fuel injection timing that is used when no misfire has occurred is maintained as-is, without altering the fuel injection timing toward the first fuel injection timing. Thereby, it is possible to suppress a reduction in the generated torque. In addition, in a cylinder in which the fuel has ignited in the previous cycle, it is not necessary to improve the ignitability further.

In the present invention, in a cylinder in which the combustion state detecting means has evaluated or detected that a misfire has occurred, the fuel injection timing of the cycle that follows the cycle that has been evaluated or detected to have misfired can be set to a fuel injection timing that is used when the combustion state detecting means has evaluated or detected that a misfire has occurred, and furthermore, during subsequent cycles, the fuel injection timing can be altered toward the first fuel injection timing.

Here, even when a misfire occurs in a certain cylinder, because in that cylinder the fuel is injected into a gas whose temperature has risen during the compression stroke, the fuel that remains in this cylinder changes to a state that readily ignites. Although much of this fuel is discharged outside the cylinder in the exhaust stroke, a portion remains in the cylinder. In addition, the fuel that remains in the cylinder mixes with the new air that flows into the cylinder during the intake stroke of the next cycle, and then during the compression stroke, the fuel is pressurized and its temperature rises. In addition, in the case in which fuel is newly injected into the cylinder, when the fuel, which is in a state that readily ignites in the cylinder, is included, the combustion starts from the fuel that is in this readily igniting state, and the flame then propagates to the fuel that is newly injected.
Thus, in the cycle that follows the cycle that has misfired, the ignition of the fuel readily occurs.

Therefore, in the cycle following a cycle in which the misfire has occurred, the fuel injection timing is not altered toward the first fuel injection timing, and even if the fuel injection timing that is used when a misfiring has occurred is maintained, the ignitability is higher than the cycle in which a misfire occurred. In addition, although the generated torque is reduced when the fuel injection timing is altered to a timing that optimizes ignitability, by not altering the fuel injection timing, it is possible to suppress the reduction in the generated torque.

In the present invention, in a cylinder in which the combustion state detecting means has evaluated or detected that a misfire has occurred, the fuel injection timing of the cycle that follows the cycle that has been evaluated or detected to have misfired is altered toward a second fuel injection timing, and furthermore, the fuel injection timing in the subsequent cycles can be altered to the first fuel injection timing.

Specifically, in the cycle that follows the cycle in which a misfire has occurred, because fuel in a state that readily ignites is included in the cylinder, even if fuel is injected at a fuel injection timing in which the ignitability of the fuel has deteriorated further than that in the cycle that has misfired, it is possible to ignite the fuel. Thus, for example, it is possible to set a fuel injection timing that optimizes the generated torque, and it is also possible to set fuel injection timing that optimizes other performances.

Thus, in the present invention, the second fuel injection timing may be a timing that is more retarded than the first fuel injection timing, and may also be a fuel injection timing in which the generated torque of the internal combustion engine becomes larger.

For example, when the fuel injection timing is after the compression top dead center, ignition becomes difficult because the temperature of the cylinder wall surface is low, but because the cooling loss becomes small, the generated torque becomes large. Thus, there is a fuel injection timing in which the generated torque is maximum after the compression top dead center. In addition, in the cycle that follows the cycle in which a misfire has occurred, because fuel in a state that readily ignites is included in the cylinder, it is possible to ignite the fuel even when the fuel injection timing is set to a timing that is after the compression top dead center, during which the ignitability of the fuel deteriorates. Furthermore, by altering the fuel injection timing to a timing wherein the generated torque is at its maximum, it is possible to make the generated torque larger. Therefore, "a fuel injection timing in which the generated torque becomes larger" may denote a fuel injection timing in which the generated torque is maximized.

In the present invention, in the case in which the combustion state detecting means has not evaluated or detected that a misfire has occurred in one or more cycles in all of the cylinders, it is possible to alter the fuel injection timing of all of the cylinders to the second fuel injection timing.

Specifically, in the case in which the combustion state of all of the cylinders is favorable, it is possible use a fuel injection timing in which the ignitability deteriorates but an increase in the torque can be realized. Thereby, it is possible to shorten the time consumed to the start-up completion of the internal combustion engine.

In the present invention, misfire count adding means that adds the number of times that the occurrence of a misfire has been evaluated or detected in each of the cylinders from the start-up initiation of the internal combustion engine may be further provided, and based on the misfire count that has been calculated by the misfire count adding means, the fuel injection timing setting means can alter the fuel injection timing of each of the cylinders.

Here, a cylinder in which a large number of misfires have occurred is a cylinder that readily misfires, and it is possible to reduce the misfire count if the fuel injection timing is altered toward a fuel injection timing in which the ignitability is further improved. In contrast, a cylinder in which a small number of misfires have occurred is a cylinder that does not misfire readily, and it is possible to shorten the time to engine start-up completion if the fuel injection timing is altered toward a fuel injection timing in which the generated torque is further increased. Specifically, if the fuel injection timing of each of the cylinders is altered based on the added misfire count, it is possible to set a fuel injection timing that is commensurate with the tendency of each of the cylinders, and it is possible to realize an improvement in the ignitability for each of the cylinders or an increase in the generated torque.

In the present invention, it is possible to further provide:
target start-up time setting means that sets a target time from the start-up initiation to the start-up completion depending on the warm-up state of the internal combustion engine during the start-up of the internal combustion engine;
target speed calculating means that calculates a target speed for the internal combustion engine at the present point in time based on the target time that is set by the target start-up time setting means; and
fuel injection timing altering means that alters the fuel injection timing depending on the difference between the target speed that has been calculated by the target calculating means and the speed of the internal combustion engine at the present point in time.

Here, in a cylinder in which no misfiring has occurred, it is possible to realize an increase in the generated torque by further retarding the fuel injection timing and it is possible to complete the start-up of the internal combustion engine more rapidly. However, when the time consumed up to the start-up completion of the internal combustion engine is short, the engine speed becomes high before the lubricating oil has been supplied to the locations in the internal combustion engine at which the lubrication is necessary, and there is a concern that the temperature of these locations will increase and deterioration or seizure of the bearings will occur. Therefore, it is not necessarily the case that a shorter time from the start-up initiation to the start-up completion in an internal combustion engine is better, and there is an appropriate value for the time to the start-up completion of an internal combustion engine. In addition, this appropriate value changes due to the heating condition of the internal combustion engine, which is determined, for example, by the cooling water temperature and the lubricating oil temperature in the internal combustion engine. Specifically, because the viscosity of the lubricating oil becomes lower as the temperature in the internal combustion engine becomes higher, the lubricating oil is supplied to the sliding locations more quickly, and thus the time consumed to the start-up completion of the internal combustion engine can be shortened.

Note that the start-up of the internal combustion engine can be completed when the speed of the internal combustion engine can be increased up to a predetermined speed. Thus, it is possible to complete the start-up of the internal combustion engine quickly while suppressing seizing and the like by controlling the time to the start-up completion of the internal combustion engine such that the time from the start-up initiation of the internal combustion engine until the engine speed has reached a predetermined speed has approached a more appropriate value.

Here, if the appropriate time up to the start-up completion and the engine speed at the start-up completion have been determined in advance, it is possible to obtain a target speed at instants during the time interval from the start-up initiation to the start-up completion. In addition, the appropriate time to the start-up completion can be obtained from the warm-up state of the internal combustion engine as described above, and the engine speed at the start-up completion time can be determined in advance. Specifically, the target speed calculating means can calculate a target speed at this time based on the time that has passed from the start-up initiation. In addition, this target speed and the actual speed are compared, and if the actual speed is lower than the target speed, the fuel injection timing is altered such that the rate of increase of the actual speed becomes high. In contrast, when the actual speed is higher than the target speed, if the fuel injection timing is altered such that the rate of increase in the actual speed becomes low, the time consumed until the start-up completion of the internal combustion engine can approach a more appropriate time. In this manner, the fuel injection timing altering means can alter the fuel injection timing in order to make the time consumed until the start-up completion of the internal combustion engine approach a more appropriate time.

The present invention can be further provided with:
target start-up time setting means that sets a target time from the start-up initiation to the start-up completion depending on the warm-up state of the internal combustion engine during the start-up of the internal combustion engine;
generated torque estimating means that estimates the generated torque of the internal combustion engine at the present point in time;
start-up completion time estimating means that estimates the time from the start-up initiation to the start-up completion based on the generated torque of the internal combustion engine at the present point in time that has been estimated by the generated torque estimating means; and
fuel injection timing altering means that alters the fuel injection timing depending on the difference between the target time that has been set by the target start-up time setting means and the estimated time that has been estimated by the start-up completion time estimating means.

As described above, there is an appropriate value for the time that is required to the start-up completion of the internal combustion engine, and the target start-up time setting means sets the target time up to the start-up completion of the internal combustion engine, based on this appropriate time.

Here, if the generated torque at the present point in time is known, the rate of the instantaneous increase of the engine speed can be estimated from this generated torque. In addition, if the rate of instantaneous increase of this engine speed continues as-is, the time that is required until attaining the speed that defines the completion of the start-up of the internal combustion engine can be estimated. Specifically, it is possible to estimate the time taken to attain the engine speed that defines the start-up completion based on the engine speed and the generated torque at the present point in time. Therefore, the start-up completion time estimating means can estimate the time from the start-up initiation to the start-up completion based on the generated torque of the internal combustion engine at the present point in time that has been estimated by the generated torque estimating means.

In addition, when the time that has been estimated by the start-up completion time estimating means is longer than the appropriate time, the fuel injection timing is altered such that the time from the present point in time to the start-up completion is shortened. In contrast, when the estimated time is shorter than the appropriate time, if the fuel injection timing is altered such that the time from the present point in time to the start-up completion becomes longer, the time to the start-up completion of the internal combustion engine can approach a more appropriate time. In this manner, the fuel injection timing altering means alters the fuel injection timing in order to make the time to the start-up completion of the internal combustion engine approach a more appropriate time.

In the present invention, it is possible set an initial value of the fuel injection timing for all of the cylinders when the internal combustion engine starts up to a first fuel injection timing.

As described above, the first fuel injection timing may be set to a fuel injection timing that can improve that ignitability of the fuel. During the start-up of an internal combustion engine, it is possible to improve the start-up performance of the internal combustion engine by prioritizing the generation of the first firing over increasing the generated torque. In addition, it is possible to improve the ignitability in any cylinder and it is possible to improve the start-up performance of the internal combustion engine by starting up the internal combustion engine after setting the fuel injection timing of all of the cylinders to the first fuel injection timing.

The present invention is further provided with learning means that stores the fuel injection timing of each of the cylinders at the start-up completion of the internal combustion engine as learned values, and it is possible to alter the initial value of the fuel injection timing for each of the cylinders when the internal combustion engine starts up depending on the learned values that have been stored by the learning means.

Here, for example, because the temperature of the glow plugs and the amount of intake air and the like are not necessarily uniform between cylinders, the fuel injection timing at the start-up completion and the misfire count from the start-up initiation to the start-up completion may be different for each cylinder. That is, there are both cylinders in which the fuel will comparatively readily ignite and cylinders in which the fuel will not readily ignite. In addition, it is possible to determine which cylinders will readily misfire and which cylinders will not readily misfire based on the fuel injection timing at start-up completion and the misfire count up to start-up completion. Additionally, if numerical values of the cylinders during the start-up completion of the internal combustion engine are stored, during the next engine start-up, it is possible to set a fuel injection timing in which the ignitability in the cylinders that will readily misfire is higher. Specifically, if a fuel injection timing is set in each of the cylinders based on the learned values during the next engine start-up, it is possible to set a fuel injection timing that is commensurate with the character of each of the cylinders immediately after the start-up initiation of the internal combustion engine, and it is possible to improve the start-up performance of the internal combustion engine.

The present invention is further provided with misfire count storing means that adds and stores the number of times that each of the cylinders has been evaluated or detected to have misfired from the start-up initiation of the internal combustion engine, and it is possible to alter the initial value of the fuel injection timing for each of the cylinders when starting up the internal combustion engine depending on the added values of the misfire count that has been stored by the misfire count storing means.

Specifically, in cylinders in which the misfire count is high, it is possible to suppress misfiring and by setting a fuel injection timing that optimizes ignitability more, and it is thereby possible to improve the start-up performance of the internal combustion engine. In addition, in cylinders that have a low misfire count or have not misfired, it is possible to shorten the start-up time of the internal combustion engine by setting a fuel injection timing that optimizes the amount of the generated torque more.

As explained above, according to the present invention, it is possible suppress misfiring during engine start-up and make the time from the start-up initiation to the start-up completion more appropriate by altering the fuel injection timing for each of the cylinders.

### BRIEF DESCRIPTION OF THE DRAWINGS

FIG 1 is a drawing that shows a schematic structure of an internal combustion engine according to the embodiments.
FIG 2 is a drawing that exhibits the relationship between the crank angle and the engine speed in a first embodiment.
FIG 3 is a flowchart that shows the flow for determining the combustion state in each of the cylinders in the first embodiment.
FIG 4 is a drawing that exhibits the relationship between the fuel injection timing, the temperature in a cylinder, the cooling loss, and the generated torque.
FIG. 5 is a timing chart that shows the shifts of the engine speed and temperature in a cylinder when injecting fuel so as to optimize the ignitability.
FIG 6 is a timing chart that shows the shifts of the engine speed and the temperature in a cylinder when injecting fuel so as to optimize the amount of the generated torque.
FIG. 7 is a timing chart that shows the timing shifts of the fuel injection timing.
FIG 8 is a flowchart that shows the flow of an alternative fuel injection timing control in the first embodiment.
FIG 9 is a drawing that shows the combustion state in the next cycle for each combustion state.
FIG 10 is a flowchart that shows the flow of the fuel injection timing control in a second embodiment.
FIG 11 is a timing chart that shows the shifts of the engine speed according to a fourth embodiment.
FIG 12 is a drawing that shows the relationship between the difference ΔNE between the target and the actual engine speeds and the retard amount of the fuel injection timing.
FIG 13 is a timing chart that shows the shifts of the engine speed in a fifth embodiment.
FIG. 14 is a figure showing the relationship between the difference ΔT between the target and estimated start-up time and the retard amount of the fuel injection timing.
FIG 15 is a timing chart that shows the shifts of the engine speed, ignition flags, and the fuel injection timing before the learning control is carried out according to a sixth embodiment.
FIG 16 is a timing chart that shows the shifts of the engine speed, ignition flags, and the fuel injection timing in the case in which learning control is carried out according to a sixth embodiment.

### BEST MODES FOR CARRYING OUT THE INVENTION

Below, specific embodiments of the fuel injection control apparatus for an internal combustion engine according to the present invention will be explained with reference to the figures. First Embodiment

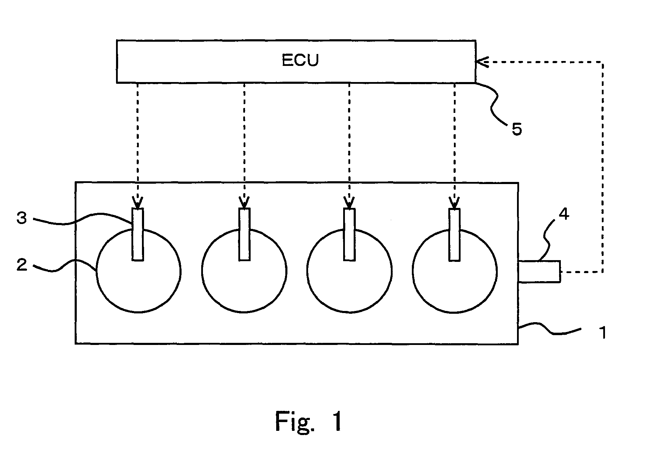

FIG 1 is a drawing that shows a schematic structure of an internal combustion engine 1 according to the present embodiment.

The internal combustion engine 1 shown in FIG. 1 is a four-cycle watercooled diesel engine having four cylinders 2.

Fuel injection valves 3 that inject fuel into each of the cylinders 2 are provided in each of the cylinders 2 of the internal combustion engine 1.

In addition, a crank position sensor 4 that outputs a signal that depends on the speed of the internal combustion engine is provided in the internal combustion engine 1.

In addition, an ECU 5 defined as an electronic control unit for controlling the internal combustion engine 1 is provided together with the internal combustion engine 1. The ECU 5 is a unit that controls the operating state of the internal combustion engine 1 depending on the operating conditions of the internal combustion engine 1 and the requirements of the driver.

A fuel injection valve 3 is connected to the ECU 5 via electrical wiring, and the opening timing and opening time of the fuel injection valves 3 are controlled for each of the cylinders by an ECU 10.

In addition, a crank position sensor 4 is electrically connected to the ECU 5, and the ECU 5 calculates the speed of the internal combustion engine based on the output signal of the crank position sensor 4.

In addition, the ECU 5 determines the combustion state of each of the cylinders 2 based on the instantaneous engine speed at compression top dead center and at 90° CA (crank angle) after compression top dead center. Here, when the instantaneous engine speed at compression top dead center in any cylinder is represented by ωa and the instantaneous engine speed at 90° CA after compression top dead center is represented by ωb, the generated torque in any cylinder is proportional to ωb² - ωa². In addition, it is thought that when the engine generated torque in any cylinder is low, a misfire will occur in that cylinder. Thus, if the value of ωb² - ωa² at which it is assumed that a misfire will occur is determined in advance as a predetermined value, in the case in which the absolute value of ωb² - ωa² in any cylinder is equal to or less than the predetermined value, it can be determined that misfiring has occurred in this cylinder.

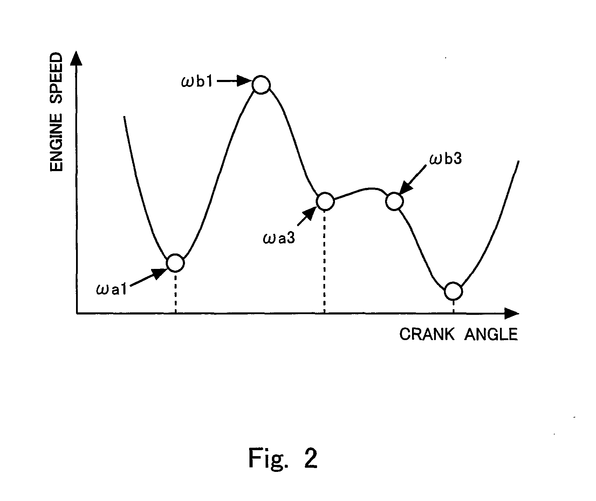

For example, FIG 2 is a drawing illustrating the relationship between the crank angle and the engine speed in the present embodiment. ωa1 and ωb1 represent the instantaneous engine speed at compression top dead center and the instantaneous engine speed at 90° CA after compression top dead center in the first cylinder, and ωa3 and ωb3 represent the instantaneous engine speed at compression top dead center and the instantaneous engine speed at 90° CA after compression top dead center in the third cylinder.

In the first cylinder, a combustion state in which ωb1²- ωa1² is comparatively large is favorable, that is, it can be determined that no misfiring has occurred. In contrast, in the third cylinder, ωb3²- ωa3² is comparatively small, and it can be determined that misfiring has occurred.

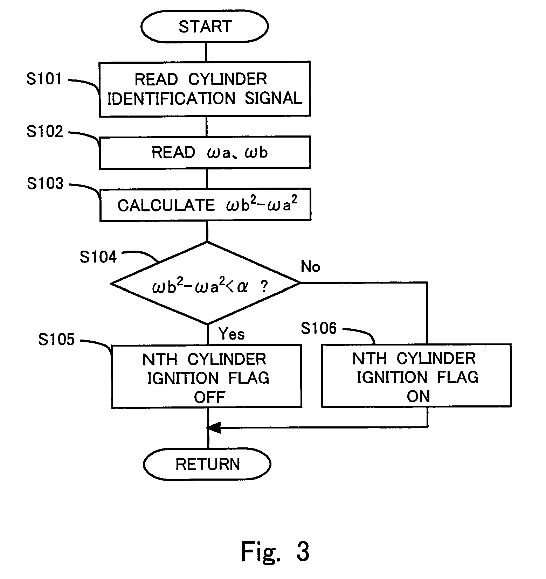

In this manner, in the present embodiment, the determination of the combustion state is carried out for each cylinder. Here, FIG 3 is a flowchart that shows the flow for determining the combustion state in each of the cylinders.

In step S101, the ECU 5 reads a cylinder identifying signal. This cylinder determining signal is a signal for determining which cylinder is at compression top dead center.

In step S102, the ECU 5 reads the instantaneous engine speed ωa at compression top dead center and the instantaneous engine speed ωb at 90° CA after compression top dead center. These values are stored by the ECU 5.

In step S103, the ECU 5 calculates ωb² - ωa².

In step S104, the ECU 5 determines whether or not the absolute value of ωb² - ωa² is equal to or less than a predetermined value α. This predetermined value α is the maximum value of ωb² - ωa² at which it is assumed that misfiring will occur, and it is found in advance by experiment and the like. Note that in the present embodiment, the ECU 5, which carries out the processing for step S104, corresponds to combustion state detecting means in the present invention.

In the case in which step S104 is a positive determination, the processing proceeds to step S105, and in contrast, in the case of a negative determination, the processing proceeds to step S 106.

In step S105, the ECU 5 turns OFF the ignition flag for the object cylinder. This ignition flag is a flag that is turned ON when the fuel is ignited, that is, when a misfiring has not occurred, and in contrast, the ignition flag is turned OFF when the fuel does not ignite, that is, when a misfiring has occurred.

In step S106, the ECU 5 turns ON the ignition flag of an object cylinder.

In this manner, in the present embodiment, the combustion state of each of the cylinders is determined, and the results are stored as the values of the ignition flag.

In addition, in the present embodiment, the fuel injection timing of a cylinder that has been determined to be misfiring is advanced. Note that in the present embodiment, the ECU 5, which advances the fuel injection timing at this time, corresponds to fuel injection timing setting means in the present invention.

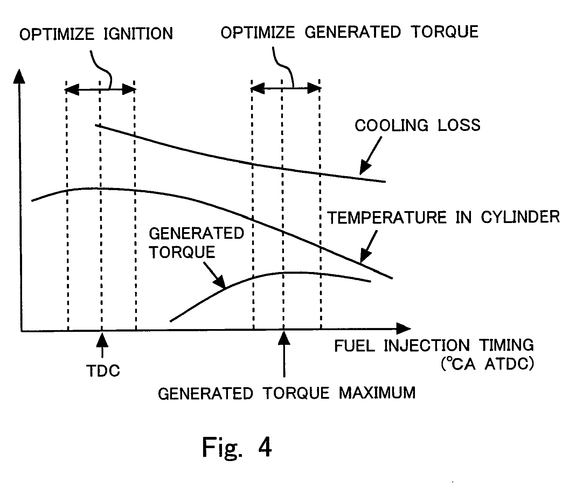

Here, FIG. 4 is a drawing that shows the relationship between the fuel injection timing, the temperature inside the cylinder, the cooling loss, and the generated torque.

When optimizing the ignitability of the fuel, the fuel injection timing is set in proximity to compression top dead center (TDC). According to FIG 4, in proximity to compression top dead center, the temperature in the cylinder becomes high, and the ignitability of the fuel is high. In addition, when optimizing the amount of the generated torque, the fuel injection timing is set, for example, at 10 to 15° CAATDC after compression top dead center. According to FIG 4, at a fuel injection timing that optimizes the amount of the generated torque, the ignitability is low because the temperature in a cylinder is low, and in addition, even if the fuel has ignited, the temperature in the cylinder does not increase and a misfire may readily occur, but because the cooling loss is small, the generated torque becomes large. In addition, the fuel injection timing for the case in which the amount of the generated torque is optimized differs depending on the type of the internal combustion engine or the conditions such as the temperature and the like. Thus, a fuel injection timing may be used for which the appropriate fuel injection timing has been found for each condition experimentally and mapped.

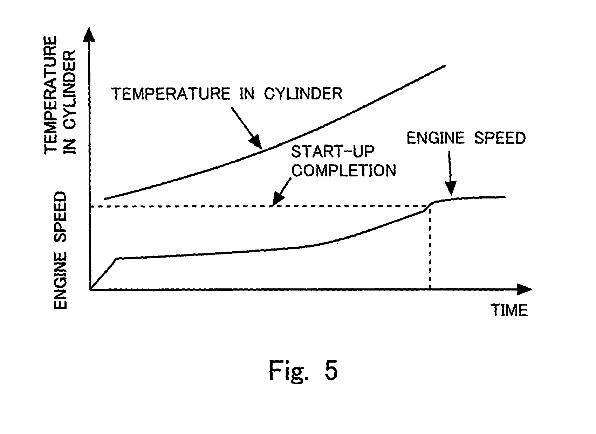

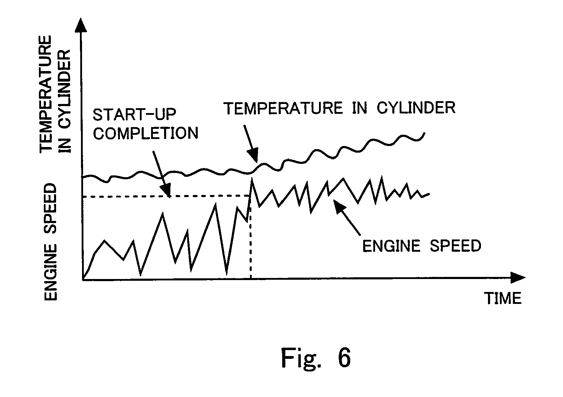

Next, FIG. 5 is a timing chart that shows the shifts of the engine speed and the temperature in the cylinders when the fuel is injected so as to optimize the ignitability, and FIG. 6 is a timing chart that shows the shifts of the engine speed and the temperature in the cylinders when fuel is injected so as to optimize the generated torque.

In the case in which ignitability is optimized, that is, in the case in which the fuel injection timing is set in proximity to the compression top dead center, the rate of the increase of the temperature in the cylinder is high due to the combustion of the fuel. However, because the generated torque becomes small when optimizing the ignitability, the increase in the engine speed takes time.

In contrast, in the case in which the amount of the generated torque is optimized, the ignitability becomes low because the temperature in the cylinder is low, and even if ignition occurs, because the temperature in the cylinder does not readily increase, the rate of the increase of the temperature in the cylinder is smaller than the case in which the ignitability is optimized. Thus, although misfiring occurs readily, the generated torque becomes large. Thereby, the rate of the increase of the engine speed is larger than the case in which the ignitability is optimized, and the time taken to attain the engine speed that defines the start-up completion is shorter than the case in which the ignitability is optimized.

Thus, in the present embodiment, the fuel injection timing of the misfiring cylinder 2 is advanced, but the fuel injection timing of the second cylinder 2 in which a misfire has not occurred is not altered, and the fuel injection timing is maintained as-is. That is, the fuel injection timing is advanced only in a misfiring cylinder.

In this manner, in the misfiring cylinder 2, the ignitability is improved by advancing the fuel injection timing in the next cycle, and misfiring again in the next cycle can be suppressed. In contrast, in the cylinder 2 in which a misfire has not occurred, the present fuel injection timing is maintained in the next cycle, and thus a reduction in the generated torque is suppressed, and the unnecessary lengthening of the time to the start-up completion of the internal combustion engine 1 can be suppressed.

Note that in the present embodiment, in the case in which no misfiring has occurred in all of the cylinders for at least one or more cycles, the fuel injection timing of all the cylinders may be retarded. In other words, advancing the fuel injection timing to optimize the increase in the generated torque and may be limited to the case in which no misfiring has occurred on all of the cylinders for at least one or more cycle.

That is, when the fuel injection timing is retarded in a cylinder in which a misfire has not occurred irrespective of whether another cylinder misfires, although the fuel injection timing is advanced in a misfiring cylinder, there is a possibility that a misfire will also occur in the next cycle. In addition, there is a concern that the ignitability will deteriorate and misfiring will occur due to retarding the fuel injection timing even in a cylinder in which a misfire has not occurred. In addition, when misfiring occurs in any cylinder, there is a concern that the engine speed will drastically fall.

In contrast, in the case in which no misfiring has occurred for at least one or more cycles in all of the cylinders, simply on the basis that there were originally no misfiring cylinders, it can be expected that the fuel will ignite in any cylinder in the next cycle even if the fuel injection timing in all of the cylinders is retarded, and it is possible to suppress a rapid fall in the engine speed.

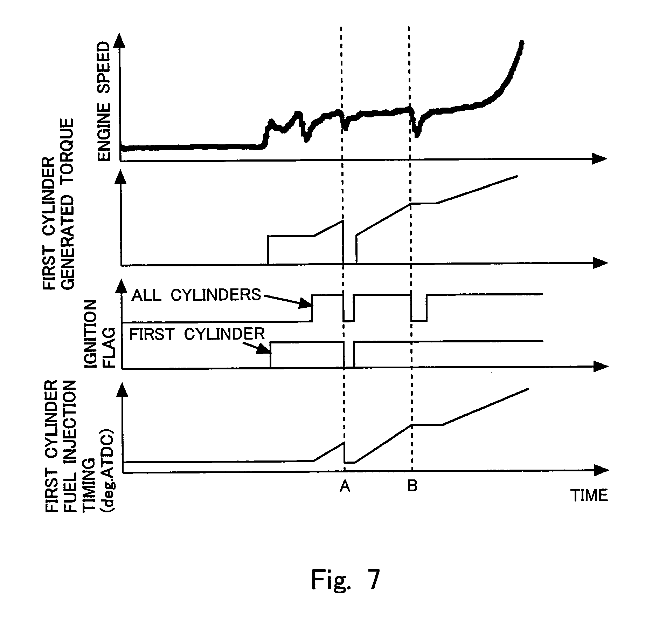

Here, FIG 7 is a timing chart that shows the time shifts of the fuel injection timing. In order from the top, the engine speed, the generated torque of the first cylinder, the all-cylinder and the first cylinder ignition flags, and the fuel injection timing of the first cylinder are shown. Here, the all-cylinder ignition flag is a flag that is set to ON (1) when it has been determined that firing has occurred in all of the cylinders during one cycle.

At the time shown by A, when the first cylinder misfires, the generated torque of the first cylinder becomes 0, and the ignition flag of the first cylinder is turned OFF (0) following the flow in FIG 3. In addition, the all-cylinder ignition flag is set to OFF (0) due to the ignition flag for the first cylinder being set to OFF (0). Additionally, only the fuel injection timing of the first cylinder is advanced, and the fuel injection timing in the second to fourth cylinders is not altered.

In addition, at the time shown by B, a cylinder other than the first cylinder has misfired. Thus, although the ignition flag of the first cylinder is set to ON (1), the all-cylinder ignition flag is set to OFF (0). Additionally, the fuel injection timing of the first cylinder is not altered by setting the all-cylinder ignition flag to OFF. Specifically, because the condition that "no misfiring occurs in all of the cylinders for at least one or more cycles" is not satisfied, and in a cylinder in which a misfire has not occurred, the fuel injection timing is maintained as it is at present. Thus, at the time shown by B, the generated torque of the first cylinder does not change. In addition, in the misfiring cylinder, the fuel injection timing is advanced.

Furthermore, at the time shown by A, the all-cylinder ignition flag is set to ON (1) from the misfiring of the first cylinder to the time indicated by B, and thus it is understood that there are no misfiring cylinders. In such a case, no misfiring has occurred in all of the cylinders for at least one or more cycles, and thus the fuel injection timing is retarded in all of the cylinders, including the first cylinder. Thus, the generated torque increases in all of the cylinders, including the first cylinder.

The flow of the fuel injection timing control described above will be explained.

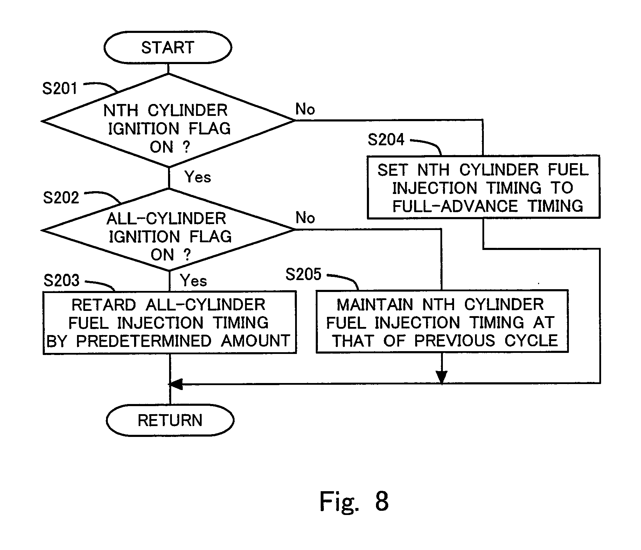

FIG 8 is a flowchart that shows the flow of an alternative fuel injection timing control in the present embodiment.

In step S201, the ECU 5 determines whether or not the ignition flag of the object Nth cylinder (where N is a number from 1 to 4) is ON.

In the case in which there is a positive determination in step S201, the processing proceeds to step S202, and in contrast, in the case in which there is a negative determination, the processing proceeds to step S204.

In step S202, the ECU 5 determines whether or not the all-cylinder ignition flag is ON.

In the case in which there is a positive determination in step S202, the processing proceeds to step S203, and in contrast, in the case in which there is a negative determination, the processing proceeds to step S205.

In step S203, the ECU 5 retards the fuel injection timing of all of the cylinders by a predetermined amount. That is, no misfiring has occurred in all cylinders for at least one or more cycles, and thus the fuel injection timing of all of the cylinders is retarded by a predetermined amount. The predetermined amount by which all of the cylinders are retarded at this time is set to an amount at which misfiring due to a reduction in the ignitability is not triggered, and this amount is, for example, found in advance by experiment or the like and stored in the ECU 5.

In step S204, the ECU 5 sets the fuel injection timing of the Nth cylinder to the full advance timing. That is, the ignition flag of the Nth cylinder is set to OFF (0), and thus the fuel injection timing is set to the full advance timing in order to improve the combustion state of the Nth cylinder. This full advance timing is, for example, at compression top dead center.

In step S205, the ECU 5 maintains the fuel injection timing of the Nth cylinder as it is at the value of the previous cycle. That is, in the Nth cylinder, although no misfire has occurred, the fuel injection timing is maintained as it is at present in the Nth cylinder in which a misfire has not occurred because a misfire has occurred on another cylinder.

In this manner, it is possible to retard the fuel injection timing of all of the cylinders only in the case in which no misfiring has occurred in all of the cylinders for at least one or more cycles. In addition, in a misfiring cylinder, it is possible to improve the combustion state by improving the ignitability, which can be done by advancing the fuel injection timing.

Note that during the start-up of the internal combustion engine, fuel injection in all cylinders is carried out at full advance timing, which is a fuel injection timing at which ignition occurs readily. That is, by prioritizing the generation of the first firing over the generation of torque, it is possible to carry out a rapid start-up. The full advance timing can be set, for example, at the compression top dead center. Second Embodiment

In this embodiment, in contrast to the first embodiment, the setting value of the fuel injection timing in the next cycle of a cylinder that has misfired is different. Otherwise, the hardware is the same as that of the first embodiment, and thus the explanation thereof has been omitted.

Here, uncombusted fuel remains in a cylinder that has misfired, and in the next cycle, this uncombusted fuel promotes the ignition of the fuel. In addition, the ignition lag during the fuel ignition becomes short due to the uncombusted fuel that remains in the cylinder. Thus, in the cylinder that has misfired, the ignitability in the cycle following the misfired cycle improves.

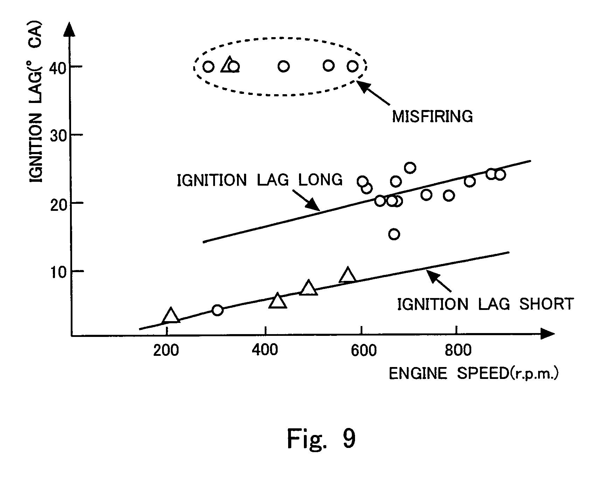

FIG. 9 is a drawing that shows the combustion state of the next cycle for each combustion state. The abscissa shows the engine speed and the ordinate shows the ignition lag. An ignition lag at 40° CA indicates that ignition has not occurred (i.e., a misfire has occurred). In addition, the triangular sign indicates the case in which a misfire has occurred in the previous cycle, and a round sign indicates the case in which a normal ignition has occurred in the previous cycle.

As can be understood from FIG 9, in the case in which a misfire has occurred in the previous cycle (triangular sign), in the next cycle, igniting is frequent, and the ignition lag becomes short. In contrast, in the case in which ignition has occurred in the previous cycle (round sign), the ignition lag becomes long even of ignition has occurred, and misfiring may be frequent. In particular, even when an ignition has occurred in the previous cycle, when the engine speed is, for example, equal to or less than 600 RPM, the probability of a misfire in the next cycle becomes extremely high.

In this manner, in the cycle following one in which misfiring has occurred, because the ignitability is high and the ignition lag is short, even if the fuel injection timing is maintained as it is when misfiring has occurred, the ignitability improves. In addition, by not advancing the fuel injection timing, it is possible to suppress a reduction in the generated torque.

Thus, in the present embodiment, in a cylinder in which a misfire has occurred in the previous cycle, in the cycle immediately following one that misfired, the fuel injection timing is maintained in the present state for only one cycle. That is, the fuel injection timing is set to the same as that of the cycle that misfired. Note that the fuel injection timing may be retarded within a range in which the ignitability is not reduced below that of a cycle that has misfired.

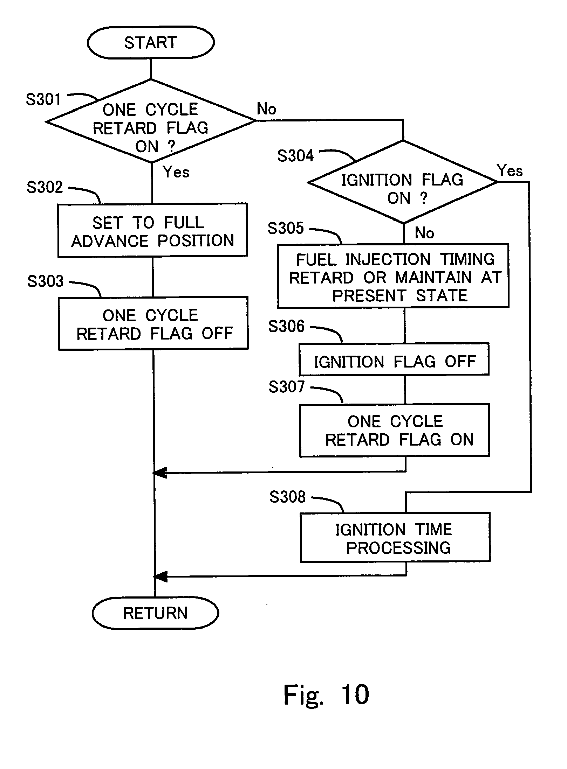

FIG 10 is a flowchart that shows the flow of the fuel injection timing control according to the present embodiment. This routine is executed in each cylinder.

In step S301, the ECU 5 determines whether or not the one cycle retard flag is ON. The one cycle retard flag is a flag is turned ON when a misfire has occurred two cycles before, and in the previous cycle, the present fuel injection timing has been maintained or has been retarded. That is, in this step, it is determined whether or not the fuel injection timing has been already altered or retarded in one cycle after a misfire.

In the case in which there has been a positive determination in step S301, the processing proceeds to step S302, and in contrast, in the case in which there has been a negative determination, the processing proceeds to step S304.

In step S302, the ECU 5 sets the fuel injection timing to full advance timing. Full advance timing is, for example, at compression top dead center. Thereby, the ignitability is improved.

In step S303, the ECU 5 turns OFF the one cycle retard flag, and preparation is made for the next misfiring. Subsequently, this routine is ended.

In step S304, the ECU 5 determines whether or not the ignition flag is turned ON, that is, determines whether or not the fuel has ignited in the previous cycle.

In step S304, in the case in which there is a positive determination, the processing proceeds to step S308, and in contrast, in the case in which there is a negative determination, the processing proceeds to step S305.

In step S305, the ECU 5 retards the fuel injection timing or maintains the present state thereof. That is, because a misfire has occurred in the previous cycle, it is possible to ignite the fuel whether the fuel injection timing is retarded or maintained in the present state because the ignitability in the next cycle is improved.

In step S306, the ECU 5 turns the ignition flag OFF.

In step S307, the ECU 5 turns ON the one cycle retard flag.

In step S308, the ECU 5 carries out processing during ignition. For example, the fuel injection timing is retarded by a predetermined amount.

In this manner, in a misfiring cylinder, the fuel injection timing of the cycle following the cycle that misfired is retarded or maintained in the present state, and thereby it is possible to ensure the ignition of the fuel and suppress the reduction in generated torque.

### Third Embodiment

In the third embodiment, the fuel injection timing is set based on the history of the past combustion states. Otherwise, the hardware is the same as that in the first embodiment, and thus the explanation thereof has been omitted.

Here, during the start-up initiation of the internal combustion engine, because ignitability is prioritized, the fuel injection timing is set on the advance side in all of the cylinders. In addition, an increase in the engine speed is realized by gradually retarding the fuel injection timing from the start-up initiation of the internal combustion engine.

In addition, in the present embodiment, during the time from the start-up initiation to the start-up completion of the internal combustion engine, the accumulated misfire count or the accumulated ignition count from the start-up initiation to the present point in time is found for each of the cylinders, and the retard amount of the fuel injection timing from the present point in time to the start-up completion is altered based on this value. In addition, in cylinders in which the accumulated misfire count is small, the retard amount of the fuel injection timing is made large, and in cylinders in which the accumulated misfire count is large, the retard amount is made small. Note that in the present embodiment, the ECU 5, which finds the accumulated misfire count, corresponds to misfire count adding means in the present invention

Here, a cylinder in which the accumulated misfire count is small or a cylinder in which the accumulated ignition count is large can be considered to be a cylinder that does not readily misfire, and the possibility of a misfire is low even when the fuel injection timing optimizes the amount of the generated torque over the ignitability. Thus, it is possible to further increase the retard amount of the fuel injection timing. Thereby, it is possible to rapidly increase the engine speed.

In contrast, a cylinder in which the accumulated misfire count is large or a cylinder in which the accumulated ignition count is small can be considered to be a cylinder that readily misfires, and the possibility of a misfire is high unless the fuel injection timing is set so as to optimize the ignitability over the amount of the generated torque. Thus, the misfiring can be suppressed by decreasing the retard amount of the fuel injection timing.

The retard amount that is determined at this time is used as the retard amount, which is set in advance depending on the accumulated misfire count or the accumulated ignition count.

In this manner, by carrying out the alteration of the fuel injection timing in each cylinder based on the accumulated misfire count or the accumulated ignition count, a falling of the engine speed can be suppressed by improving the ignitability in a cylinder in which the accumulated misfire count is large or a cylinder in which the accumulated ignition count is small. Additionally, it is possible to increase the engine speed rapidly by increasing the generated torque in a cylinder in which the accumulated misfire count is small or the accumulated ignition count is large.
Thus, it is possible to improve the start-up performance of the internal combustion engine while suppressing misfiring for the internal combustion engine overall.

Note that the process that has been explained in the present embodiment can be applied to the following cases, which have been explained in the embodiments described above: the case in which the fuel injection timing of a cylinder is retarded when the ignition flag of the cylinder has been turned ON; the case in which the fuel injection timing of all of the cylinders is retarded when the ignition flag for all of the cylinders has been turned ON; or the case in which the fuel injection timing of a cylinder is advanced when the ignition flag of the cylinder has been turned OFF. Fourth Embodiment

In this embodiment, during the time from the start-up initiation to the start-up completion of the internal combustion engine, fuel injection timing is altered so as to reduce the difference between a target speed at the present point in time that is calculated using a target time (below, referred to as the "target start-up time") from the start-up initiation to the start-up completion of the internal combustion engine and the actual speed at the present point in time. In addition, the hardware is the same as that in the first embodiment, and thus the explanation thereof has been omitted.

Here, when the time from the start-up initiation to the start-up completion of the internal combustion engine is long, time is taken until the vehicle can start moving. However, when the engine speed becomes high before the lubricating oil for the internal combustion engine has spread into the internal combustion engine, there is a concern that abrasion or seizing will occur at the locations that require lubrication. Thus, it is desirable that the internal combustion engine be started up at an appropriate time. In addition, there is an appropriate value for the time from the start-up initiation to the start-up completion of the internal combustion engine.

Here, as shown in FIG 5 and FIG 6, when the fuel injection timing is advanced, the increase in the engine speed becomes sluggish, and when the fuel injection timing is retarded, the increase in the engine speed becomes rapid. Therefore, in the present embodiment, during the time from the start-up initiation to the start-up completion of the internal combustion engine, in the case in which the actual engine speed is lower than the target speed at the present point in time, the fuel injection timing is retarded in order to increase the rate of the increase of the engine speed.

In contrast, in the case in which the target speed at the present point in time is lower than the actual engine speed at the present point in time, the fuel injection timing is advanced in order to lower the rate of the increase of the engine speed.

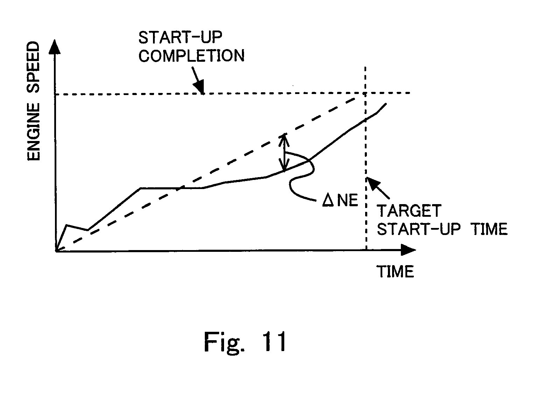

Next, FIG 11 is a timing chart that shows the shifts of the engine speed in the present embodiment. The target start-up time is an appropriate value for the time taken from the start-up initiation to the start-up completion of the internal combustion engine, and is determined in advance. In addition, the engine speed that defines the start-up completion is also determined in advance. Note that in the present embodiment, the ECU 5, which sets the target start-up time, corresponds to target start-up time setting means in the present invention.

In addition, in the present embodiment, in FIG 11, the point of the start-up initiation (that is, when the time is 0 and the engine speed is 0) and the point that is the target start-up time and that defines the start-up completion are connected by a straight line. The line that connects the point of this start-up initiation and the point that is the target start-up time and that defines the start-up completion is shown by the dashed line in FIG. 11, and is referred to below as the target NE line. Note that in the present embodiment, the target NE line is shown by a straight line, but this target NE line is not necessarily always a straight line.

In addition, if the time that has passed from the start-up initiation is known, it is possible to obtain the target speed at the instant that this time has passed by the target NE line. In addition, if the actual engine speed is on the target NE line at each instant, it is possible to complete the start-up of the engine in proximity to the target start-up time.

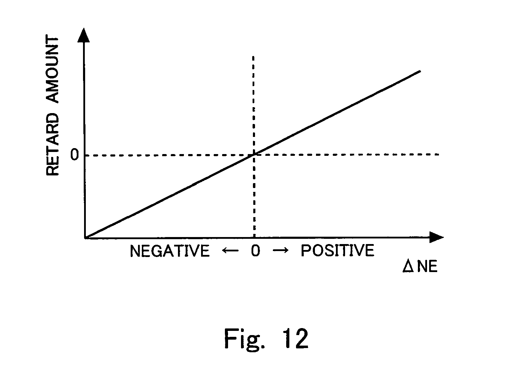

Thus, in the present embodiment, the time that has passed from the engine start-up initiation is substituted in FIG 11, the target speed at that time is calculated, and the difference ONE between the target speed and the actual engine speed is calculated. In addition, the fuel injection timing is determined based on FIG 12. Note that in the present embodiment, the ECU 5, which calculates the target speed, corresponds to target speed calculating means in the present invention.

Here, FIG 12 is a drawing that shows the relationship between the difference ΔNE between the target and the actual engine speeds and the retard amount of the fuel injection timing. In the case in which the retard amount on the ordinate is equal to or less than 0, the fuel injection timing is advanced. In addition, the ΔNE on the abscissa becomes positive if the target speed is higher than the actual engine speed, and becomes negative if it is lower.

In addition, if the actual engine speed is lower than the target speed, in order to increase the rate of increase of the engine speed, the fuel injection timing is retarded such that the generated torque is optimized more. At this time, the ΔNE becomes positive, and the retard amount becomes larger as the ΔNE becomes larger.

In contrast, if the actual engine speed is higher than the target speed, in order to lower the rate of the increase of the engine speed, the fuel injection timing is advanced such that the generated torque is not optimized. At this time, the ΔNE becomes negative and the advance amount becomes larger as the ΔNE becomes larger.

Note that in the present embodiment, the ECU 5, which alters the fuel injection timing, corresponds to fuel injection timing altering means in the present invention.

By such feedback control for an engine speed, it is possible to complete the start-up of the engine in proximity to the target start-up time. Thereby, the engine speed does not become high until the lubricating oil has been supplied to the locations that require lubrication, and it is possible to suppress abrasion and seizing.

Not that the process explained in the present embodiment can be adopted to the following cases, which have been explained in the embodiments described above: the case in which the fuel injection timing of a cylinder is retarded when the ignition flag of the cylinder has been turned ON; the case in which the fuel injection timing of all of the cylinders is retarded when the all-cylinders ignition flag has been turned ON; and the case in which the fuel injection timing of a cylinder is advanced when the ignition flag of the cylinder has been turned OFF.

### Fifth embodiment

In the present embodiment, the start-up of the internal combustion engine is completed in proximity to the target start-up time by altering the fuel injection timing so as to reduce the difference between the estimated time from the start-up initiation to the start-up completion of the internal combustion engine, which has been estimated based on the operating conditions at the present point in time, and the target start-up time. Otherwise, the hardware is the same as that in the first embodiment, and thus the explanation thereof has been omitted.

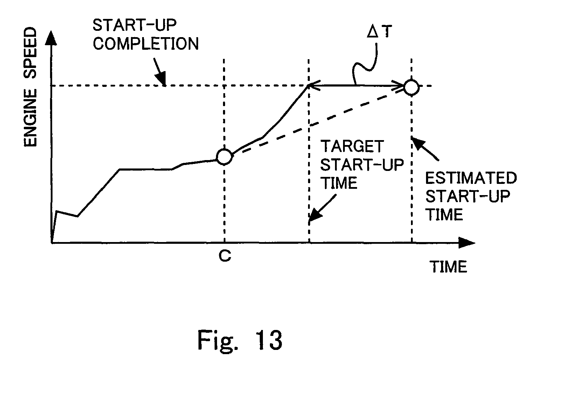

Here, FIG. 13 is a timing chart that shows the shifts of the engine speed in the present embodiment. The target start-up time is an appropriate value for the time taken from the start-up initiation to the start-up completion of an internal combustion engine, and is determined in advance. In addition, the engine speed that defines the start-up completion is also determined in advance. Note that in the present embodiment, the ECU 5, which sets the target start-up time, corresponds to target start-up time setting means in the present invention.

Here, it is possible to calculate the rate of the increase of the speed of an internal combustion engine based on the generated torque at the present point in time, and when the rate of increase of the speed of this internal combustion engine continues up to the engine speed that defines the start-up completion, it is possible to calculate the time taken from the present point in time to the start-up completion. In addition, it is possible to estimate the time taken from the start-up initiation to the start-up completion of an internal combustion engine by adding the time that has passed from the start-up initiation to the present point in time of the internal combustion engine and the time taken from the present point in time to the start-up completion. Note that in the present embodiment, the ECU 5, which estimates the torque that is applied to the engine based on ωb² - ωa² that has been explained in the first embodiment, corresponds to generated torque estimating means in the present invention. In addition, in the present embodiment, the ECU 5, which estimates the time taken from the start-up initiation to the start-up completion of the internal combustion engine, corresponds to start-up completion time estimating means in the present invention.

In addition, in FIG 13, the subsequent engine speed obtained based on the instantaneous generated torque at the time shown by C is shown by the dashed line. In addition, the time of the start-up completion time that has been estimated as described above is shown as the estimated start-up time. Furthermore, the difference between the estimated start-up time and the target start-up time is shown as ΔT.

In addition, if the fuel injection timing is altered such that the difference ΔT between the estimated start-up time and the target time at each instant is eliminated, then the start-up of the engine will be completed in proximity to the target start-up time.

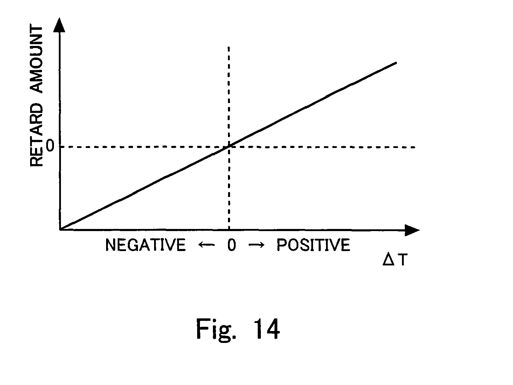

Thus, in the present embodiment, the difference ΔT between the estimated start-up time and the target time is calculated, and the fuel injection timing is determined based on FIG. 14.

Here, FIG 14 is a drawing that shows the relationship between the difference ΔT between the target and the estimated start-up times and the retard amount of the fuel injection timing. In the case in which the retard amount on the ordinate is equal to or less than 0, the fuel injection timing is advanced. In addition, the ΔT on the abscissa becomes positive if the estimated start-up time is longer than the target start-up time, and becomes negative if it is shorter.

In addition, if the estimated start-up time is longer than the target start-up time, in order to increase the rate of increase of the engine speed, the fuel injection timing is retarded such that the generated torque is optimized. At this time, ΔT becomes positive, and the retard amount becomes larger as ΔT becomes larger.

In contrast, if the estimated start-up time is shorter than the target start-up time, in order to lower the rate of increase of the engine speed, the fuel injection timing is advanced such that the generated torque is not optimized more. At this time, ΔT becomes negative, and the advance amount becomes larger as ΔT becomes larger.

Note that in the present embodiment, the ECU 5, which alters the fuel injection timing, corresponds to fuel injection timing altering means in the present invention.

In this manner, it is possible to complete the start-up of the engine in proximity to the target start-up time. Thereby, the engine speed does not become too high before lubricating oil has been supplied to the locations that require lubrication, and it is possible to suppress abrasion and seizing.

Note that the process explained in the present embodiment can be adopted to the cases that have been explained in the embodiments described above: the case in which the fuel injection timing of a cylinder is retarded when the ignition flag of the cylinder has been turned ON; the case in which the fuel injection timing is retarded when the all-cylinders ignition flag has been turned ON; and the case in which the fuel injection timing of a cylinder is advanced when the ignition flag of the cylinder has been turned OFF.

### Sixth Embodiment

In this embodiment, fuel injection timings, which are commensurate with each of the cylinders, are set in advance during the next and subsequent engine start-ups based on the fuel injection timings during the start-up completion. That is, learning control of the fuel injection timing during the engine start-up is carried out. Otherwise, the hardware is the same as that of the first embodiment, and thus the explanation thereof is omitted.

Here, the readiness to ignite differs in each of the cylinders due to variations such as the temperatures of the glow plugs during engine start-up and the amount of air that is drawn into the cylinders, and the fuel injection timing during start-up completion in each of the cylinders and the misfire (or ignition) count up to the start-up completion differ. Specifically, learning which cylinders readily ignite and which cylinders readily misfire is possible by storing the fuel injection timing in each of the cylinders during start-up completion and/or the misfire (or ignition) count up to the start-up completion. In addition, it is possible to improve the start-up performance of an internal combustion engine by determining the initial value of the fuel injection timing for each of the cylinders during the next and subsequent engine start-ups by using the results of this learning.

Note that in the present embodiment, the ECU 5, which stores the fuel injection timing in each of the cylinders during start-up completion as a learned value, corresponds to learning means in the present invention. In addition, in the present embodiment, the ECU 5, which stores the misfire count up to the start-up completion in each of the cylinders, corresponds to misfire count storing means in the present invention.

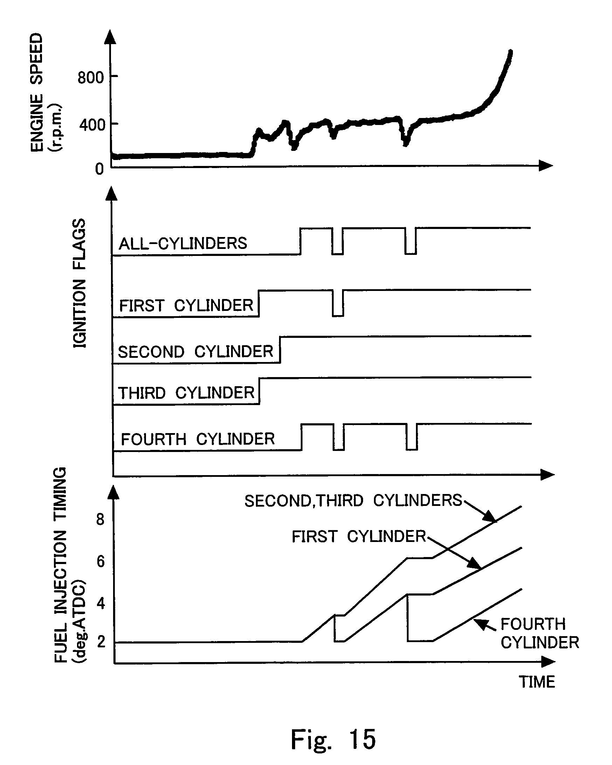

Here, FIG 15 is a timing chart that shows the shifts of the engine speed, the ignition flags, and the fuel injection timing before carrying out the learning control according to the present embodiment.

As has been explained in the above embodiments, the fuel injection timing of all of the cylinders is retarded when the ignition flag has been turned ON for one cycle or more cycles in all of the cylinders. In addition, in cylinders in which the ignition flag has been turned OFF, the fuel injection timing for the next one cycle is advanced.

That is, in the case in which the ignition flag has been turned OFF in the first cylinder, the fuel injection timing in the first cylinder is advanced, and the fuel injection timing is not altered in the other cylinders. Similarly, in the case in which the ignition flag has been turned OFF in the fourth cylinder, the fuel injection timing is advanced in the fourth cylinder, and the fuel injection timing is not altered in the other cylinders. Then a misfire occurs one time in the first cylinder and a misfire occurs two times in the fourth cylinder. In addition, in the second and third cylinders, the ignition flag in each of the cylinders has been turned ON, and thus a misfire has not occurred, and the fuel injection timing is retarded when the all-cylinder ignition flag has been turned ON.

In this manner, when the start-up of the internal combustion engine has completed, the retard amount of the fuel injection timing of the second and third cylinders becomes the largest, and the retard amount of the fuel injection timing becomes small in the first cylinder and the fourth cylinder, in that order. As a result, it is understood that misfiring does not occur readily in the second and third cylinders, and misfiring occurs easily in the first cylinder and the fourth cylinder, in that sequence.

In addition, in the present embodiment, the retard amount that is used when the fuel injection timing is retarded becomes larger as the cylinder ignites more readily. That is, according to the example in FIG. 15, when the fuel injection timing of the second and third cylinders is retarded, the retard amount is made larger than when the fuel injection timing of the first cylinder is retarded. In addition, when the fuel injection timing of the first cylinder is retarded, the retard amount is made larger than when the fuel injection timing of the fourth cylinder is retarded.

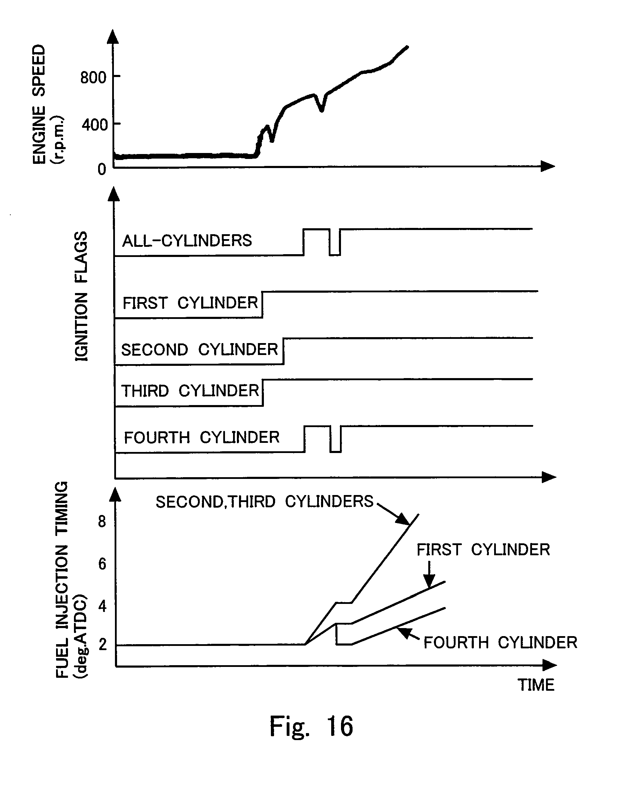

Here, FIG 16 is a timing chart that shows the shifts of the engine speed, the ignition flags, and the fuel injection timing in the case in which the learning control according to the present embodiment has been carried out.

After the start-up, while the all-cylinders ignition flag is turned ON, the fuel injection timing is retarded in each of the cylinders, but because this amount is largest in the second and third cylinders, the rate of increase of the retard amount of the fuel injection timing becomes large, and the slope of the fuel injection timing shown in the time chart becomes the largest. In addition, the rate of increase of the retard amount of the fuel injection timing in the first cylinder and the fourth cylinder, in that order, becomes small, and the slope of the fuel injection timing becomes small.

In this manner, in cylinders that readily ignite, by making the retard amount of the fuel injection timing large, it is possible to increase the generated torque. In addition, in cylinders that misfire readily, it is possible to suppress misfiring by making the retard amount of the fuel injection timing smaller. Thereby, it is possible to improve the start-up performance of the internal combustion engine.

Note that the process that has been explained in the present embodiment can be carried out as much as possible in combination with the processes explained in the embodiments described above.

## Claims

1. A fuel injection control apparatus for a compression ignition-type internal combustion engine having a plurality of cylinders, **characterized in** comprising:
fuel injection valves that are provided on each of the cylinders and that inject fuel into each of the cylinders;
combustion state detecting means that evaluates or detects the combustion state in each of the cylinders; and
fuel injection timing setting means that alters a fuel injection timing of a cylinder that said combustion state detecting means has evaluated or detected to have misfired toward a first fuel injection timing.

2. The fuel injection control apparatus for an internal combustion engine according to claim 1, **characterized in that** said first fuel injection timing is a fuel injection timing in which the fuel ignites more readily than a fuel injection timing that is used when misfiring has been detected.

3. The fuel injection control apparatus for an internal combustion engine according to claims 1 or 2, **characterized in that**, in a cylinder that said combustion state detecting means has evaluated or detected to have not misfired, the fuel injection timing of a cycle following a cycle in which the cylinder has been evaluated or detected to have not misfired is set to a fuel injection timing that is used when said combustion state detecting means has evaluated or detected said cylinder to have not misfired.

4. The fuel injection control apparatus for an internal combustion engine according to any one of claims 1 to 3, **characterized in that**, in a cylinder that said combustion state detecting means has evaluated or detected to have misfired, the fuel injection timing of the cycle following the cycle in which said cylinder has been evaluated or detected to have misfired is set to a fuel injection timing that is used when said fuel combustion detecting means has evaluated or detected said cylinder to have misfired, and furthermore, in subsequent cycles, the fuel injection timing is altered toward a first fuel injection timing.

5. The fuel injection control apparatus for an internal combustion engine according to any one of claims 1 to 3, **characterized in that**, in a cylinder that said combustion state detecting means has evaluated or detected to have misfired, the fuel injection timing of the cycle following the cycle in which said cylinder has been evaluated or detected to have misfired is altered toward a second fuel injection timing, and furthermore, in subsequent cycles, the fuel injection timing is altered toward a first fuel injection timing.

6. The fuel injection control apparatus for an internal combustion engine according to claim 5, **characterized in that** said second fuel injection timing is a timing that is more retarded than said first fuel injection timing, and is a fuel injection timing in which generated torque of said internal combustion engine becomes larger.

7. The fuel injection control apparatus for an internal combustion engine according to any one of claims 1 to 6, **characterized in that** in the case in which said combustion state detecting means has not evaluated or detected that misfiring has occurred for one or more cycles in all cylinders, the fuel injection timing for all cylinders is altered toward a second fuel injection timing.

8. The fuel injection control apparatus for an internal combustion engine according to any one of claims 4 to 7, **characterized in** further comprising misfire count adding means that adds the number of times that misfiring has been evaluated or detected in each of said cylinders from the start-up initiation of the internal combustion engine, and said fuel injection timing setting means alters the fuel injection timing of each of said cylinders based on the misfire count that has been added by said misfire count adding means.

9. The fuel injection control apparatus for an internal combustion engine according to any one of claims 1 to 8, **characterized in** further comprising:
target start-up time setting means that sets the target time from the start-up initiation to the start-up completion depending on the warm-up state of said internal combustion engine during the start-up of said internal combustion engine;
target speed calculating means that calculates a target speed of said internal combustion engine at the present point in time based on the target time that has been set by the target start-up time setting means; and
fuel injection timing altering means that alters the fuel injection timing depending on the difference between the target speed that has been calculated by the target speed calculating means and the speed of the internal combustion engine at the present point in time.

10. The fuel injection control apparatus for an internal combustion engine according to any one of claims 1 to 8, **characterized in** further comprising:
target start-up time setting means that sets a target time from the start-up initiation to the start-up completion depending on the warm-up state of said internal combustion engine during the start-up of said internal combustion engine;
generated torque estimating means that estimates the generated torque of said internal combustion engine at the present point in time;
start-up completion time estimating means that estimates the time from the start-up initiation to the start-up completion based on the generated torque of said internal combustion engine at the present point in time that has been estimated by said generated torque estimating means; and
fuel injection timing altering means that alters the fuel injection timing depending on the difference between the target time that has been set by said target start-up time setting means and said estimated time that has been evaluated by said start-up completion time estimating means.

11. The fuel injection control apparatus for an internal combustion engine according to any one of claims 1 to 10, **characterized in that** an initial value of the fuel injection timing for all cylinders is set to the first fuel injection timing when said internal combustion engine is started up.

12. The fuel injection control apparatus for an internal combustion engine according to any one of claims 1 to 10, **characterized in** further comprising learning means that stores the fuel injection timing of each of said cylinders during the start-up completion of an internal combustion engine as learned values, wherein the initial value of the fuel injection timing of each of said cylinders when said internal combustion engine starts up is altered depending on the learned values that have been stored by the learning means.

13. The fuel injection control apparatus for an internal combustion engine according to any one of claims 1 to 10, **characterized in** further comprising misfire count storing means that adds and stores the number of times that misfiring has been evaluated or detected to have occurred in each of said cylinders from the start-up initiation of said internal combustion engine, wherein the initial value of the fuel injection timing in each of said cylinders when said internal combustion engine starts up is altered depending on the added value of the misfire count that has been stored by the misfire count storing means.
